# FASCICULE DE BREVET EUROPEEN

(11) **EP 3 280 982 B1**
(45) Date de publication et mention de la délivrance du brevet: **22.12.2021**
(21) Numéro de dépôt: 16718233.6
(22) Date de dépôt: 07.04.2016
(51) Int. Cl.: G01F 23/26

(54) **DISPOSITIF POUR MESURER LE NIVEAU D'UN LIQUIDE**
VORRICHTUNG ZUR MESSUNG DES FÜLLSTANDS EINER FLÜSSIGKEIT
DEVICE FOR MEASURING THE LEVEL OF A LIQUID

(30) Priorité: 08.04.2015 FR 1553033; 24.06.2015 FR 1555806
(43) Date de publication de la demande: 14.02.2018
(73) Titulaire: Plastic Omnium Advanced Innovation and Research, 1130 Bruxelles (BE)
(72) Inventeur: NAYDENOV, Volodia, 1348 Louvain-la-Neuve (BE); HERDIER, Romain, 1180 Uccle (BE)
(74) Mandataire: Remy, Vincent Noel Paul
(86) Numéro de dépôt international: PCT/EP2016/057623
(87) Numéro de publication internationale: WO 2016/162424

(56) Documents cités:
- CN-U- 202 974 384
- DE-A1- 4 037 927
- US-A- 4 589 077
- US-A1- 2002 116 999
- US-A1- 2005 072 228

## Description

L'invention concerne un dispositif pour mesurer le niveau d'un liquide dans un réservoir de véhicule. L'invention s'applique notamment à un réservoir pour le stockage de carburant ou pour le stockage d'un liquide de dépollution des gaz d'échappement, comme par exemple une solution à base d'urée telle que l'AdBlue^{®} (marque déposée). L'invention concerne également un réservoir de véhicule comprenant un tel dispositif.

Les réservoirs de véhicule, notamment les réservoirs à carburant, embarquent généralement plusieurs dispositifs de mesure, dont un dispositif pour mesurer le niveau d'un liquide.

Un dispositif pour mesurer le niveau d'un liquide connu repose sur l'utilisation d'une sonde capacitive segmentée. Une telle sonde comprend plusieurs segments capacitifs disposés les uns au-dessus des autres à intervalle régulier. Chaque segment est formé par des électrodes interdigités. Un tel dispositif est par exemple décrit dans le document de brevet EP 2 657 663. Ce dispositif présente plusieurs inconvénients, comme par exemple le fait que la constante diélectrique du liquide impacte la mesure de niveau. Généralement, la constante diélectrique du liquide varie lors de son utilisation. Un deuxième inconvénient est que la sensibilité et la résolution du capteur dépendent de la géométrie et de la dimension des segments, de la distance entre les électrodes et de la surface des électrodes. Ainsi, avec ce type de capteur connu il est difficile d'obtenir une mesure de niveau précise.

DE 40 37 927 A1 décrit un dispositif pour mesurer le niveau d'un liquide dans un réservoir comprenant au moins une sonde capacitive. Ladite sonde capacitive comprend une structure de support supportant au moins une pluralité d'éléments capacitifs agencée de manière à former au moins deux rangées d'éléments capacitifs s'étendant le long d'un axe longitudinal. Lesdites au moins deux rangées d'éléments capacitifs sont espacées les unes des autres le long d'un axe qui est transversal audit axe longitudinal. Les éléments capacitifs desdites au moins deux rangées d'éléments capacitifs sont décalés le long de l'axe longitudinal les uns par rapport aux autres d'une rangée à l'autre.

Un des buts de l'invention est donc de proposer un dispositif pour mesurer le niveau d'un liquide qui réduit l'impact de la constante diélectrique du liquide sur la mesure de niveau, avec une meilleure sensibilité et une meilleure résolution.

Dès lors, dans un mode de réalisation particulier de l'invention, il est proposé un dispositif pour mesurer le niveau d'un liquide dans un réservoir de véhicule comprenant au moins une sonde capacitive, ladite sonde capacitive comprenant une structure de support supportant au moins une pluralité d'éléments capacitifs agencée de manière à former au moins deux rangées d'éléments capacitifs s'étendant le long d'un axe longitudinal, lesdites au moins deux rangées d'éléments capacitifs étant espacées les unes des autres le long d'un axe qui est transversal audit axe longitudinal. Les éléments capacitifs sont tels qu'ils sont décalés le long de l'axe longitudinal les uns par rapport aux autres d'une rangée à l'autre.

Ainsi, il est proposé un schéma de répartition de la pluralité d'éléments capacitifs dans laquelle les éléments capacitifs sont décalés les uns par rapport aux autres, d'une rangée à l'autre, le long de l'axe longitudinal et où chaque élément capacitif est apte à générer une valeur de capacité en fonction du niveau de liquide sur l'élément capacitif. Avec ce schéma de répartition, des zones additionnelles pour mesurer le niveau d'un liquide sont créées dans l'espacement défini entre deux éléments d'une même rangée. Le dispositif selon l'invention présente donc une résolution élevée. On note que la résolution du dispositif pour mesurer le niveau d'un liquide selon l'invention dépend du nombre de rangées d'éléments capacitifs. Plus le nombre de rangées d'éléments capacitifs est grand et meilleure sera la résolution. Par exemple, dans le cas où une première rangée d'éléments capacitifs confère à elle seule une résolution de 4 mm, l'utilisation d'une deuxième rangée d'éléments capacitifs (dans laquelle les éléments capacitifs sont décalés le long de l'axe longitudinal par rapport aux éléments capacitifs de la première rangée) permet d'obtenir une résolution de 2 mm ; l'utilisation d'une troisième et quatrième rangées d'éléments capacitifs permet d'obtenir une résolution de 1 mm ; etc.

Dans un mode de réalisation particulier, ladite pluralité d'éléments capacitifs peut être associée à une autre pluralité d'éléments capacitifs agencée selon un schéma de répartition différent sur la structure de support, tel que par exemple un schéma de répartition de l'art antérieur (sans décalage des éléments capacitifs le long de l'axe longitudinal les uns par rapport aux autres d'une rangée à l'autre).

Un élément capacitif comprend au moins une électrode d'excitation et au moins une électrode de mesure séparées entre elles par un support isolant, par exemple l'air. Dans un mode de réalisation particulier, les éléments capacitifs peuvent avoir une forme géométrique quelconque, par exemple en carré ou en rond. Dans un autre mode de réalisation particulier, les éléments capacitifs peuvent être des électrodes capacitives interdigitées.

Dans un mode de réalisation avantageux, la sonde capacitive comprend une structure de support comprenant une première face supportant au moins une desdites rangées d'éléments capacitifs et au moins une deuxième face supportant au moins une autre desdites rangées d'éléments capacitifs. Les rangées d'éléments capacitifs sont ainsi avantageusement agencées sur ces aux moins deux faces, toujours espacées les unes des autres le long de l'axe longitudinal, dans le but de réduire considérablement la largeur de la structure de support.

Dans un mode de réalisation particulier, la structure de support peut être un matériau diélectrique, comme par exemple un matériau composite de résine époxy renforcée de fibres de verre, sur lequel est agencé la pluralité d'éléments capacitifs qui peuvent être en cuivre ou tout autre matériau conducteur. Ces éléments capacitifs peuvent être fixés à la structure de support par un précédé de fabrication de circuit imprimé ("Printed circuit board") qui présente l'avantage d'être un procédé de fabrication connu et qui permet une production importante avec des couts relatifs faibles.

Dans un mode de réalisation particulier, la structure de support peut avoir une forme géométrique quelconque, à deux faces ou plus, comme par exemple une forme cubique ou pyramidale.

Avantageusement, au moins une portion de la structure de support sur laquelle est agencée la pluralité d'éléments capacitifs peut être protégée de l'agressivité chimique du liquide à mesurer grâce à une couche isolante recouvrant cette dernière. La couche isolante peut être un verni de protection, de quelques dizaines de micromètres, appliquée directement sur ladite au moins une portion de la structure de support sur laquelle est agencée la pluralité d'éléments capacitifs. Elle peut également être une matière plastique allant de quelques centaine de micromètres à plusieurs millimètres surmoulée directement sur ladite au moins une portion de la structure de support sur laquelle est agencée la pluralité d'éléments capacitifs. La couche isolante en plastique peut également être une pièce injectée séparément dans laquelle la structure de support peut être incorporée. Avantageusement, la couche isolante est appliquée sur l'ensemble de la structure de support sur laquelle les éléments capacitifs sont agencés.

Avantageusement, le dispositif de mesure selon l'invention peut être entouré d'un tube protecteur, présentant au moins deux ouvertures afin de laisser passer le liquide. Ce tube peut être réalisé en matière plastique (conducteur ou non conducteur), par exemple un plastique de la catégorie des polyamides. Le tube protecteur peut être une pièce injectée ou extrudée séparément du dispositif dans laquelle ledit dispositif peut être incorporé. Le tube protecteur protège le dispositif des impacts mécaniques, tel que les impacts contre les parois du réservoir par exemple. Il peut également être connecté à une masse ce qui permet de réduire les perturbations électromagnétiques et électrostatiques pour le dispositif selon l'invention.

Selon l'invention, le dispositif pour mesurer le niveau d'un liquide dans un réservoir de véhicule comprend une unité de traitement étant configurée pour :
- obtenir des valeurs de capacité au moyen de ladite pluralité d'éléments capacitifs ;
- convertir les valeurs de capacité obtenues en un code binaire en fonction d'au moins un seuil de basculement préalablement associé à chaque élément capacitif ; et
- générer une information relative au niveau du liquide dans le réservoir à partir dudit code binaire.

Il est ainsi proposé d'associer un seuil de basculement à chaque élément capacitif. Le seuil de basculement associé à un élément capacitif selon l'invention correspond à une valeur de capacité que ledit élément capacitif est apte à générer. Par exemple, pour un élément capacitif permettant une mesure de capacité allant de 0,25 pF à 1,5 pF, le seuil de basculement dudit élément capacitif peut être défini pour une valeur de capacité de 0,75 pF. Si la valeur de capacité obtenue pour ledit élément capacitif lors d'une mesure est de 0,5 pF, alors l'unité de traitement convertira cette valeur de capacité en valeur de code binaire 0. En revanche, pour une valeur de capacité obtenue de 1 pF, l'unité de traitement convertira cette valeur de capacité en valeur de code binaire 1.

Dans un mode de réalisation particulier, chaque élément capacitif est associé à un même seuil de basculement. Dans un autre mode de réalisation particulier, chaque élément capacitif est associé à un seuil de basculement différent. Dans un mode de réalisation particulièrement avantageux, chaque élément capacitif est associé à un seuil de basculement haut et un seuil de basculement bas. Ceci permet une meilleure immunité aux bruits du dispositif selon l'invention. Lors de l'utilisation d'un véhicule, les éléments capacitifs sont successivement secs, recouverts ou humides ce qui impacte les valeurs minimales et maximales de capacité de ces éléments capacitifs. L'utilisation de seuil de basculement haut et de seuil de basculement bas permet de s'affranchir de ces variations.

Le au moins un seuil de basculement est défini en fonction du type de liquide à mesurer et est stocké dans la mémoire de l'unité de traitement. L'unité de traitement traite ces mesures de capacité en fonction d'une stratégie de conversion prédéterminée. Par exemple, cette stratégie (i.e. traitement) consiste à comparer chacune des valeurs de capacité obtenues au seuil de basculement prédéterminé afin de générer un code binaire en fonction des valeurs de capacité converties. En d'autres termes, l'unité de traitement selon l'invention est configurée pour convertir les valeurs de capacité obtenues en états logiques (ou valeurs de code binaire) qui définissent ledit code binaire final. Ensuite, l'unité est configurée pour déterminer (ou calculer) une valeur de niveau du liquide dans le réservoir. Par exemple, cette détermination peut se faire en comparant le code binaire généré avec un code de comparaison, pré-enregistré et stocké dans la mémoire de l'unité de traitement, qui relie un code binaire à une valeur de niveau du liquide donnée.

Ainsi, le dispositif selon l'invention agit comme une jauge de niveau discrète. Dans un mode de réalisation particulier, l'unité peut en outre être configurée pour générer une information relative à l'inclinaison du véhicule à partir dudit code binaire (généré). Pour ce faire, cette détermination peut être réalisée en comparant le code binaire généré avec un code de comparaison, pré-enregistré et stocké dans la mémoire de l'unité de traitement, qui relie un code binaire à une valeur d'inclinaison du véhicule donnée.

Avantageusement, la structure de support intègre un réseau de connections électriques configuré pour connecter la pluralité d'éléments capacitifs à l'unité de traitement. De cette façon, les connections électriques intégrées au sein de la structure de support sont protégées de toutes agressions chimiques du liquide à mesurer.

Il est maintenant présenté plusieurs modes de réalisation de l'invention, décrits à titre d'exemples non limitatifs dans la description des figures et en référence aux dessins suivants dans lesquels:
- La figure 1 illustre schématiquement un dispositif pour mesurer le niveau d'un liquide selon un premier mode de réalisation de l'invention.
- La figure 2 illustre schématiquement un dispositif pour mesurer le niveau d'un liquide selon un deuxième mode de réalisation de l'invention.
- La figure 3 illustre de façon schématique un dispositif pour mesurer le niveau d'un liquide selon l'invention.
- La figure 4 illustre de façon schématique un traitement effectué par l'unité de traitement pour générer un code binaire à partir d'un dispositif pour mesurer le niveau d'un liquide selon la figure 1.
- La figure 5 illustre de façon schématique un traitement effectué par l'unité de traitement pour générer un code binaire à partir d'un dispositif pour mesurer le niveau d'un liquide selon la figure 2.
- La figure 6 illustre de façon schématique un code binaire généré à partir des mesures de capacité obtenues au moyen du dispositif pour mesurer le niveau d'un liquide selon les figures 1 et 4.

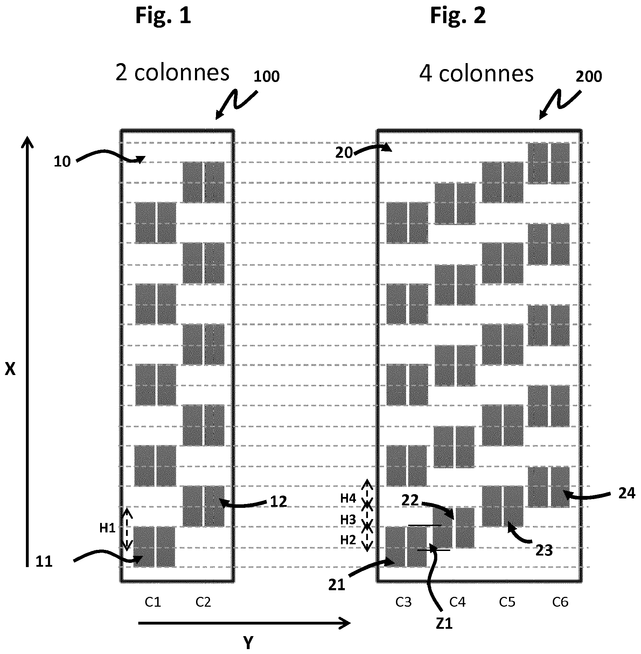

La figure 1 illustre schématiquement un dispositif 100 pour mesurer le niveau d'un liquide selon un premier mode de réalisation de l'invention qui comprend des éléments capacitifs (11, 12) agencés sur une structure de support 10 selon un premier schéma de répartition.

Comme illustré dans l'exemple de la figure 1, le dispositif comprend deux colonnes (i.e. rangées) (C1, C2) d'éléments capacitifs. Chaque colonne comprend cinq éléments capacitifs s'étendant le long d'un axe longitudinal X et étant espacés les uns des autres le long d'un axe transversal Y. Les éléments capacitifs de la colonne C2 sont décalés le long d'un axe longitudinal X d'une hauteur H1 par rapport aux éléments capacitifs de la colonne C1, où H1 correspond à la résolution du dispositif. Dans cet exemple, on note que les éléments capacitifs 11 de la colonne C1 ne sont pas spatialement superposés avec les éléments capacitifs 12 de la colonne C2.

La figure 2 illustre schématiquement un dispositif 200 pour mesurer le niveau d'un liquide selon un deuxième mode de réalisation de l'invention qui comprend des éléments capacitifs (21, 22, 23 et 24) agencés sur une structure de support 20 selon un deuxième schéma de répartition.

Comme illustré dans l'exemple de la figure 2, le dispositif comprend quatre colonnes (i.e. rangées) (C3, C4, C5, C6) d'éléments capacitifs. Chaque colonne comprend cinq éléments capacitifs s'étendant le long d'un axe longitudinal X et étant espacés les uns des autres le long d'un axe transversal Y. Les éléments capacitifs 22 de la colonne C4 sont décalés le long d'un axe longitudinal X d'une hauteur H2 par rapport aux éléments capacitifs 21 de la colonne C3. Les éléments capacitifs 23 de la colonne C5 sont décalés le long dudit axe longitudinal X d'une hauteur H3 par rapport aux éléments capacitifs 22 de la colonne C4. Les éléments capacitifs 24 de la colonne C6 sont décalés le long dudit axe longitudinal X d'une hauteur H4 par rapport aux éléments capacitifs 23 de la colonne C5. Dans l'exemple de la figure 2, les hauteurs H2, H3 et H4 sont égales. Dans une variante de réalisation, les hauteurs H2, H3 et H4 peuvent être différentes les unes par rapport aux autres. Quand H3 et H4 sont égales à H2, alors H2 correspond à la résolution du dispositif. Le schéma de répartition illustré en figure 2 est tel que les éléments capacitifs des colonnes C3, C4, C5, C6 se chevauchent spatialement. Par exemple, l'élément capacitif 21 de la colonne C3 et l'élément capacitif 22 de la colonne C4 se chevauchent spatialement dans une zone Z1.

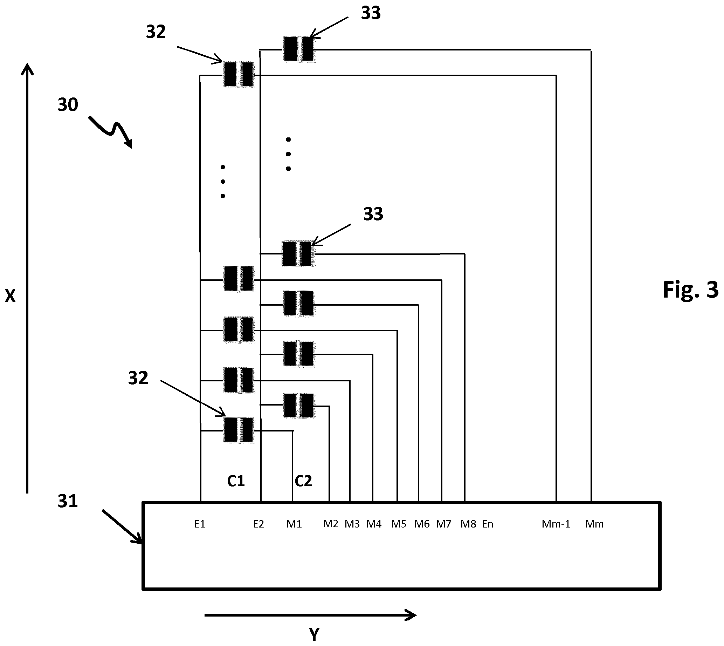

Comme illustré dans l'exemple de la figure 3, le dispositif comprend une unité de traitement 31 connectée électriquement à une pluralité d'éléments capacitifs (32, 33) disposés par colonne (i.e. rangées) (C1, C2) et s'étendant le long d'un axe longitudinal X et étant espacés les uns des autres le long d'un axe transversal Y. Dans cet exemple, l'unité de traitement 31 et les éléments capacitifs (32, 33) sont connectés pour fonctionner de la façon suivante : l'unité de traitement 31 excite les éléments capacitifs 32 de la colonne C1 via le signal E1 et mesure ensuite la capacité M de chaque élément capacitif de la colonne C1. Le principe de fonctionnement est le même pour les éléments capacitifs 33 de la colonne C2. Dans cet exemple, la dernière valeur de capacité mesurée est notée Mm, où m correspond au nombre total de valeurs de capacité à mesurer. Par conséquent, m dépend de la hauteur de la sonde capacitive (car plus la hauteur sera importante, et plus un nombre élevé d'éléments capacitifs sera nécessaire pour couvrir la totalité de la hauteur) et du nombre de colonnes (car pour obtenir une résolution de mesure élevée pour le dispositif, plusieurs colonnes d'éléments capacitifs seront nécessaires).

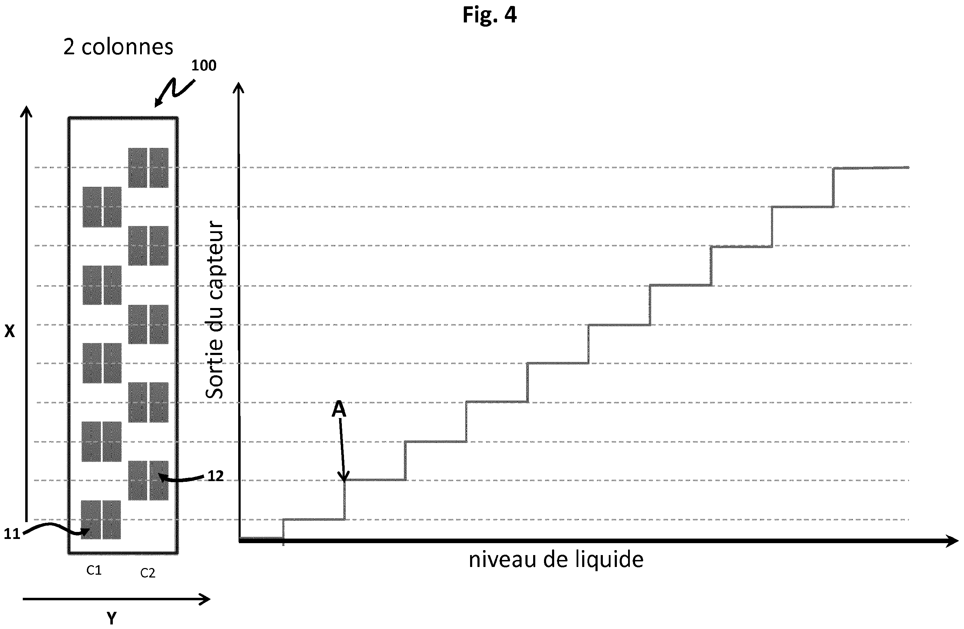

La figure 4 illustre de façon schématique un traitement effectué par l'unité de traitement pour générer un code binaire en fonction des mesures de capacité générées par le dispositif 100 décrit ci-dessus en relation avec la figure 1.

Dans l'exemple représenté figure 4, le palier A de la courbe correspond au moment où le niveau de liquide est tel que la mesure de capacité pour un élément capacitif (12) considéré est inférieure ou égale au seuil de basculement. Une fois ce seuil de basculement atteint, c'est l'évolution du niveau du liquide qui conditionne la valeur de code binaire que l'unité de traitement attribue à cet élément capacitif. On note dans cet exemple, la création d'une zone additionnelle pour mesurer le niveau d'un liquide dans l'espacement défini entre deux éléments capacitifs 11 de la colonne (i.e. rangées) C1 qui correspond à une information supplémentaire quant au niveau du liquide par rapport à l'art antérieur.

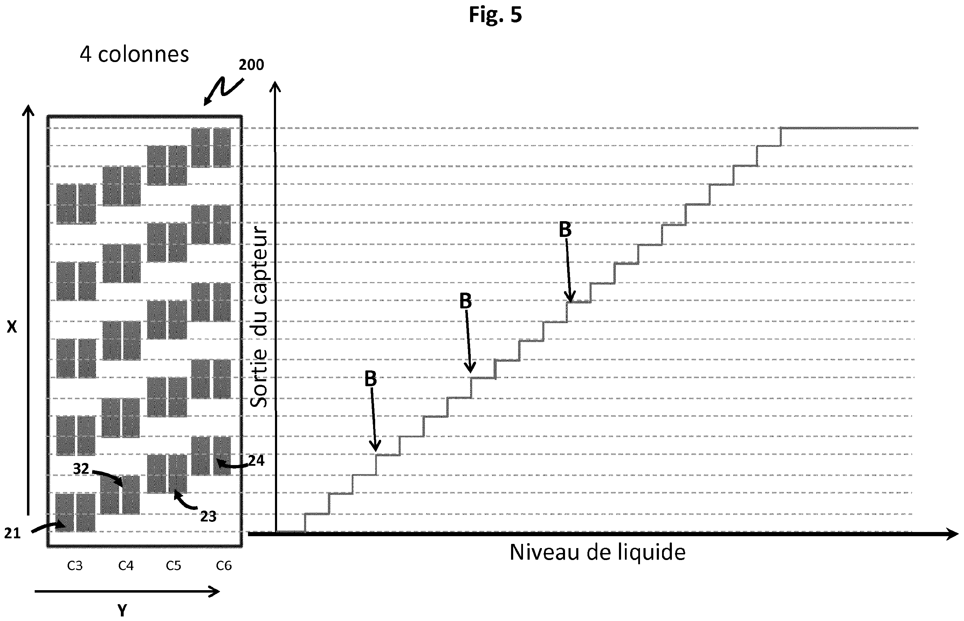

La figure 5 illustre de façon schématique un traitement effectué par l'unité de traitement pour générer un code binaire en fonction des mesures de capacité générées par le dispositif 200 décrit ci-dessus en relation avec la figure 2.

Dans l'exemple représenté figure 5, chaque palier B de la courbe correspond également au moment où le niveau de liquide est tel que la mesure de capacité pour l'élément capacitif considéré est égale au seuil de basculement. Une fois ce seuil de basculement atteint, c'est l'évolution du niveau du liquide qui conditionne la valeur de code binaire que l'unité attribue à cet élément capacitif. Dans cet exemple, on note la création de trois zones additionnelles pour mesurer le niveau d'un liquide dans l'espacement défini entre deux éléments capacitifs 21 de la colonne (i.e. rangées) C4, qui correspondent à trois informations supplémentaires quant au niveau du liquide par rapport à l'art antérieur. Par conséquent la résolution du dispositif est considérablement améliorée.

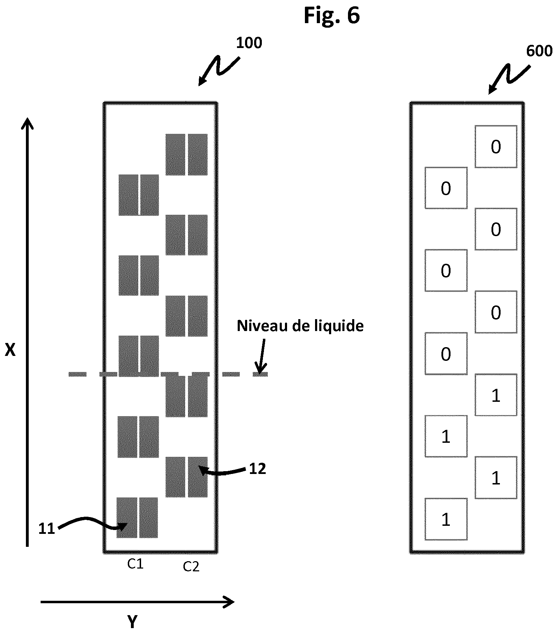

La figure 6 illustre de façon schématique un code binaire généré 600 représentatif d'un niveau d'un liquide à partir des mesures de capacité obtenues à partir d'un dispositif 100 décrit ci-dessus en relation avec les figures 1 et 4.

Dans cet exemple, le niveau du liquide est représenté par la ligne discontinue. Les éléments capacitifs qui se situent en dessous de cette ligne ont des valeurs de capacité supérieures au seuil de basculement préalablement associé à chaque élément capacitif, ce qui traduit par une valeur de code binaire de 1 pour chacun de ces éléments capacitifs. A l'inverse, les éléments capacitifs qui se situent au-dessus de cette ligne ont des valeurs de capacité inférieures au seuil de basculement préalablement associé à chaque élément capacitif, ce qui traduit par une valeur de code binaire de 0 pour chacun de ces éléments capacitifs. Par conséquent, le code binaire obtenu dans cet exemple est le suivant : 1111000000.

## Revendications

1. Dispositif (100, 200) pour mesurer le niveau d'un liquide dans un réservoir de véhicule comprenant au moins une sonde capacitive, ladite sonde capacitive comprenant une structure de support (10, 20) supportant au moins une pluralité d'éléments capacitifs (11,12; 21,22,23,24; 32,33) agencée de manière à former au moins deux rangées (C1, C2, C3, C4, C5, C6) d'éléments capacitifs s'étendant le long d'un axe longitudinal (X), lesdites au moins deux rangées d'éléments capacitifs étant espacées les unes des autres le long d'un axe qui est transversal (Y) audit axe longitudinal, où les éléments capacitifs desdites au moins deux rangées d'éléments capacitifs sont décalés le long de l'axe longitudinal les uns par rapport aux autres d'une rangée à l'autre, **caractérisé en ce que** le dispositif comprend en outre une unité de traitement (31) configurée pour :
- obtenir des valeurs de capacité pour chaque élément capacitif au moyen de ladite pluralité d'éléments capacitifs ;
- convertir les valeurs de capacité obtenues de chaque élément capacitif en un code binaire en fonction d'au moins un seuil de basculement préalablement associé à chaque élément capacitif ; et
- générer une information relative au niveau du liquide dans le réservoir à partir dudit code binaire.

2. Dispositif selon la revendication 1, **caractérisé en ce que** chaque élément capacitif est associé à un seuil de basculement haut et un seuil de basculement bas.

3. Dispositif selon la revendication 1 ou 2, **caractérisé en ce que** l'unité de traitement est en outre configurée pour générer une information relative à l'inclinaison du véhicule à partir dudit code binaire.

4. Dispositif selon l'une quelconque des revendications précédentes, **caractérisé en ce que** la structure de support intègre un réseau de connections électriques configuré pour connecter chaque élément capacitif à l'unité de traitement.

5. Dispositif selon l'une quelconque des revendications précédentes, **caractérisé en ce que** la structure de support comprend une première face supportant au moins une desdites rangées d'éléments capacitifs et au moins une deuxième face supportant au moins une autre desdites rangées d'éléments capacitifs.

6. Dispositif selon l'une quelconque des revendications précédentes, **caractérisé en ce qu'**au moins une portion de la structure de support est recouverte d'une couche isolante.

7. Dispositif selon l'une quelconque des revendications précédentes, **caractérisé en ce qu'**il comprend un tube protecteur comprenant au moins deux ouvertures et **en ce que** le tube est connecté à une masse.

8. Dispositif selon l'une quelconque des revendications précédentes, **caractérisé en ce que** le liquide est un carburant ou un liquide de dépollution des gaz d'échappement.

9. Réservoir de véhicule pour le stockage d'un carburant ou d'un liquide de dépollution des gaz d'échappement comprenant un dispositif pour mesurer le niveau d'un liquide selon l'une quelconque des revendications précédentes.

## Patentansprüche

1. Vorrichtung (100, 200) zum Messen des Füllstands einer Flüssigkeit in einem Tank eines Fahrzeugs, aufweisend wenigstens eine kapazitive Sonde, wobei die kapazitive Sonde eine Trägerstruktur (10, 20) aufweist, die wenigstens eine Mehrzahl von kapazitativen Elementen (11, 12; 21, 22, 23, 24; 32, 33) trägt, die so eingerichtet ist, dass sie wenigstens zwei Reihen (C1, C2, C3, C4, C5, C6) von kapazitativen Elementen bildet, die sich entlang einer Längsachse (X) erstrecken, wobei die wenigstens zwei Reihen von kapazitativen Elementen entlang einer Achse (Y), die zu der Längsachse quergerichtet ist, voneinander beabstandet sind, wobei die kapazitativen Elemente der wenigstens zwei Reihen von kapazitativen Elementen entlang der Längsachse relativ zu den anderen von einer Reihe zu der anderen versetzt sind, **dadurch gekennzeichnet, dass** die Vorrichtung ferner eine Verarbeitungseinheit (31) aufweist, die eingerichtet ist, um:
- Kapazitätswerte für jedes kapazitative Element mittels der Mehrzahl von kapazitativen Elementen zu erhalten;
- die erhaltenen Kapazitätswerte jedes kapazitativen Elements in Abhängigkeit von wenigstens einer Kippschwelle, die zuvor jedem kapazitativen Element zugeordnet wurde, in einen Binärcode umzuwandeln; und
- eine Information über den Füllstand der Flüssigkeit in dem Tank aus dem Binärcode zu generieren.

2. Vorrichtung nach Anspruch 1, **dadurch gekennzeichnet, dass** jedes kapazitative Element einer oberen Kippschwelle und einer unteren Kippschwelle zugeordnet ist.

3. Vorrichtung nach Anspruch 1 oder 2, **dadurch gekennzeichnet, dass** die Verarbeitungseinheit ferner eingerichtet ist, um eine Information über die Neigung des Fahrzeugs aus dem Binärcode zu generieren.

4. Vorrichtung nach einem der vorhergehenden Ansprüche, **dadurch gekennzeichnet, dass** die Trägerstruktur ein Netz elektrischer Verbindungen integriert, das eingerichtet ist, um jedes kapazitative Element mit der Verarbeitungseinheit zu verbinden.

5. Vorrichtung nach einem der vorhergehenden Ansprüche, **dadurch gekennzeichnet, dass** die Trägerstruktur eine erste Fläche, die wenigstens eine der Reihen von kapazitativen Elementen trägt, und wenigstens eine zweite Fläche, die wenigstens eine andere der Reihen von kapazitativen Elementen trägt, aufweist.

6. Vorrichtung nach einem der vorhergehenden Ansprüche, **dadurch gekennzeichnet, dass** wenigstens ein Teil der Trägerstruktur mit einer Isolierschicht bedeckt ist.

7. Vorrichtung nach einem der vorhergehenden Ansprüche, **dadurch gekennzeichnet, dass** sie ein Schutzrohr aufweist, das wenigstens zwei Öffnungen aufweist, und dass das Rohr mit einer Masse verbunden ist.

8. Vorrichtung nach einem der vorhergehenden Ansprüche, **dadurch gekennzeichnet, dass** die Flüssigkeit ein Kraftstoff oder eine Flüssigkeit zum Reinigen der Abgase ist.

9. Tank eines Fahrzeugs zum Bevorraten eines Kraftstoffs oder einer Flüssigkeit zum Reinigen der Abgase, aufweisend eine Vorrichtung zum Messen des Füllstands einer Flüssigkeit nach einem der vorhergehenden Ansprüche.

## Claims

1. Device (100, 200) for measuring the level of a liquid in a vehicle tank comprising at least one capacitive probe, said capacitive probe comprising a support structure (10, 20) carrying at least a plurality of capacitive elements (11,12; 21,22,23,24; 32,33) arranged with such a way as to form at least two rows (C1, C2, C3, C4, C5, C6) of capacitive elements extending along a longitudinal axis (X), said at least two rows of capacitive elements being spaced from each other along an axis which is transverse (Y) said longitudinal axis where the capacitive elements of said at least two rows capacitive elements are offset along the longitudinal axis relative to each other from one row to another,
**characterized in that** the device further comprises a processing unit (31) configured for:
- obtain capacity values for each capacitive element by means of said plurality of capacitive elements;
- convert the capacity values obtained from each capacitive element into a binary code based on at least one failover threshold previously associated with each capacitive element; and
- generate information about the level of the liquid in the tank from said binary code.

2. Device according to claim 1, **characterized in that** each capacitive element is associated with a high tipping threshold and a low tipping threshold.

3. Device according to claim 1 or 2, **characterized in that** the processing unit is further configured to generate information relating to the inclination of the vehicle from said binary code.

4. A device according to any one of the preceding claims, **characterized in that** the support structure incorporates a network of electrical connections configured to connect each capacitive element to the processing unit.

5. Device according to any one of the precedingclaims, **characterized in that** the support structure comprises a first face bearing at least one of said rows of capacitive elements and at least one second face supporting at least one other of said rows of capacitive elements.

6. Device according to any one of the preceding claims, **characterized in that** at least a portion of the support structure is covered with an insulating layer.

7. Device according to any one of the preceding claims, **characterized in that** it comprises a protective tube comprising at least two openings and **in that** the tube is connected to a mass.

8. Device according to any one of the preceding claims, **characterized in that** the liquid is a fuel or a liquid for the control of exhaust gases.

9. Vehicle tank for the storage of a fuel or exhaust gas pollution control liquid comprising a device for measuring the level of a liquid according to any one of the preceding claims.
